# EUROPÄISCHE PATENTSCHRIFT

(11) **EP 2 612 040 B1**
(45) Veröffentlichungstag und Bekanntmachung des Hinweises auf die Patenterteilung: **20.08.2014**
(21) Anmeldenummer: 11745712.7
(22) Anmeldetag: 06.07.2011
(51) Int. Cl.: F16B 13/00, F16B 13/02

(54) **SPREIZDÜBEL**
EXPANSION ANCHOR
CHEVILLE À EXPANSION

(30) Priorität: 01.09.2010 DE 202010012084 U
(43) Veröffentlichungstag der Anmeldung: 10.07.2013
(73) Patentinhaber: HILTI Aktiengesellschaft, 9494 Schaan (LI)
(72) Erfinder: SPROEWITZ, Michael, CH-9470 Buchs (CH)
(86) Internationale Anmeldenummer: PCT/EP2011/061374
(87) Internationale Veröffentlichungsnummer: WO 2012/028360

(56) Entgegenhaltungen:
- EP-A1- 0 536 084
- EP-A1- 1 367 265
- WO-A1-2005/106259
- DE-A1- 3 208 782

## Beschreibung

Die Erfindung betrifft einen Spreizdübel mit einem sich in einer axialen Richtung erstreckenden Dübelkörper, der eine in axialer Richtung verlaufende Aufnahme für ein Spreizelement aufweist, gemäss dem Oberbegriff des Anspruchs 1.

Dübel werden für die Befestigung verschiedener Bauteile in einem Untergrund verwendet. Der Dübel wird dazu in eine im Untergrund vorgesehene Bohrung eingeschoben. Anschließend wird ein Spreizbereich des Dübels aufgespreizt und der Dübel somit in der Bohrung verklemmt. Zum Aufspreizen des Dübels werden Spreizelemente, beispielsweise Schrauben verwendet, die in eine Aufnahme des Dübels eingeführt werden und die ein Aufspreizen des zuvor erwähnten Spreizbereichs bewirken. Insbesondere bei der Verwendung von Schraub-Spreizelementen sind an der Außenseite der Dübel starre Fortsätze vorgesehen, die ein Mitdrehen des Dübels beim Eindrehen des Schraub-Spreizelements verhindern. Diese haben allerdings den Nachteil, dass diese den Außendurchmesser des Spreizdübels erhöhen, wodurch das Einschieben des Spreizdübels in die Bohrung erschwert wird. Werden die Fortsätze kleiner gewählt oder der Lochdurchmesser vergrößert, ist eine zufriedenstellende Verdrehsicherung durch die Vorsprünge nicht mehr möglich. Zudem kann bei der Vergrößerung des Lochdurchmessers eine ausreichende Klemmwirkung des Spreizbereichs und somit eine ausreichende Haltekraft des Spreizdübels nicht mehr gewährleistet werden.

Ein gattungsgemässer Spreizdübel geht aus der WO 2005/106259 A1 hervor. Weitere Spreizdübel sind aus der EP 1 367 265 A1, der DE 32 08 782 A1 und der EP 0 536 084 A1 bekannt.

Aufgabe der Erfindung ist es, einen einfach herzustellenden Spreizdübel günstig bereitzustellen, der einfach zu montieren ist, eine gute Verdrehsicherung beim Einschrauben eines Schraub-Spreizelements und eine ausreichend hohe Klemmkraft aufweist.

Erfindungsgemäß wird dies mit einem Spreizdübel gelöst, mit einem sich in einer axialen Richtung erstreckenden Dübelkörper, der eine in axialer Richtung verlaufende Aufnahme für ein Spreizelement aufweist, und mit zumindest einem radial elastischen Bereich, der durch zwei am Dübelkörper vorgesehene, sich in axialer Richtung erstreckende Schlitze gebildet ist, die sich in axialer Richtung des Spreizdübels zumindest teilweise überlappen, wobei die Dübelwand in unbelastetem Zustand des Spreizdübels zumindest einen radial nach außen vorstehenden Klemmvorsprung hat, welcher im Überlappungsbereich der beiden sich in axialer Richtung des Spreizdübels zumindest teilweise überlappenden Schlitze angeordnet ist und zwischen diesen beiden Schlitzen liegt, wobei die Dübelwand radial innenseitig im Bereich des Klemmvorsprungs gegenüber dem axial angrenzenden Innenwandbereich des Spreizdübels bündig abschließt, und wobei die zu dem Klemmvorsprung gehörenden Schlitze in axialer Richtung gesehen einen Winkel von maximal 110° zur Dübelmittelachse einschließen.

Im unbelasteten Zustand befindet sich der Spreizdübel vor dem einschieben in das Bohrloch und ohne aufzunehmendes Spreizelement. Durch den bündigen Übergang der radial innenseitigen Dübelwand im Bereich eines Schlitzes und des daran axial angrenzenden Innenwandbereiches ist ein absatzloser Übergang in diesem Bereich gewährleistet, was eine Fertigung mit Werkzeugkern erst möglich macht.

Die Aufnahme des Spreizdübels ist im Bereich des Klemmvorsprungs, also in den elastischen Bereichen innenseitig absatzlos, insbesondere zylindrisch ausgebildet, während die Klemmvorsprünge auf der Außenseite des Spreizdübel von der Außenwand vorstehen. Anders als die schon bekannten starren Fortsätze sind die Klemmvorsprünge aber durch die radial elastischen Bereiche in radialer Richtung federnd nachgiebig ausgebildet. Das heißt, die Klemmvorsprünge können beim Einschieben des Spreizdübels in die Bohrung eines Untergrundes radial nach innen nachgeben, so dass ein einfaches Einschieben des Spreizdübels möglich ist. Im in die Bohrung eingeschobenen Zustand werden die elastischen Bereiche durch die Klemmvorsprünge radial nach innen gedrängt, so dass die vom angrenzenden Innenwandbereich nach innen vorstehen. Da die Klemmvorsprünge radial nach außen in ihre Ursprungsposition zurück drängen, liegen diese an der Wandung der Bohrung an und bilden somit eine Verdrehsicherung für den Dübel.

Beim Einschrauben des Spreizelements kommt dieses mit dem radial nach innen vorstehenden elastischen Bereich in Anlage und drängt diese radial nach außen, wodurch bei weiterem Einschrauben die Klemmvorsprünge zwischen Spreizelement und Wandung der Bohrung verklemmt werden, so dass zum einen der Spreizdübel in der Bohrung fixiert wird und zum anderen durch die erhöhte Klemmwirkung die Verdrehsicherheit ansteigt. Weiterhin wirken die Klemmvorsprünge als Formschluß-Element in Hohluntergründen, wie Hohlblocksteinen, da beim Einschrauben des Spreizelementes die Klemmvorsprünge hinter einen Steinbereich, z.B. Steg greifen und die Haltekraft damit weiter erhöhen. Die Klemmvorsprünge erfüllen hier also drei Funktionen: Zum einen sind diese eine Verdrehsicherung für den Spreizdübel, zum anderen dienen sie als Klemmelement zur Fixierung des Spreizdübels; zudem dienen sie als hintergreifendes Element in Hohl- bzw. Lochsteinen. Durch eine entsprechende Anpassung der Klemmvorsprünge ist zudem eine einfache Anpassung und Änderung der Klemmkraft des Spreizdübels möglich.

Neben der verbesserten Funktion des Spreizdübels liegt ein weiterer Vorteil in der einfachen und kostengünstigen Herstellung. Üblicherweise werden solche Spreizdübel im Spritzgussverfahren aus Kunststoff hergestellt, wobei für die Gestaltung der Innengeometrie der Aufnahme ein Werkzeugkern verwendet wird, der nach dem Erstarren des Kunststoffs in axialer Richtung aus der Aufnahme herausgezogen werden. Da die elastischen Bereiche innenseitig bündig mit den axial angrenzenden Innenwandabschnitten der Aufnahme abschließen, ist eine solche Fertigung auch mit dem erfindungsgemäßen Spreizdübel möglich. Würden die elastischen Bereiche so ausgebildet, dass diese in unbelastetem Zustand nach innen vorstehen und erst beim Einschrauben des Spreizelements nach außen gedrängt werden, wäre eine solche Herstellung nicht möglich, da durch die nach innen ragenden Bereiche eine einfache Entnahme des Werkzeugkerns nicht möglich wäre.

Der elastische Bereich ist erfindungsgemäss durch zwei am Dübelkörper vorgesehene, sich in axialer Richtung erstreckende Schlitze gebildet, die sich in axialer Richtung des Spreizdübels zumindest teilweise überlappen, wobei der Klemmvorsprung im Überlappungsbereich dieser Schlitze angeordnet ist. Dadurch können die elastischen Bereiche in radialer Richtung des Dübelkörpers federnd nachgeben.

Um eine gleichmäßige Klemmkraft zu bewirken und den Spreizdübel mittig in der Bohrung zu zentrieren, sind vorzugsweise jeweils zwei diametral gegenüberliegende, auf gleicher axialer Höhe liegende Klemmvorsprünge vorgesehen. Die Klemmvorsprünge liegen dabei zwischen zwei sich in axialer Richtung des Spreizdübels zumindest teilweise überlappenden Schlitzen, wobei die zu einem Klemmvorsprung gehörenden Schlitze in axialer Richtung gesehen einen Winkel von maximal 110°, vorzugsweise maximal 90° zur Dübelmittelachse einschließen. Das heißt, zwischen den radial elastischen Bereichen verbleibt ein ausreichend breiter, starrer Bereich, der die Stabilität des Dübels gewährleistet, sodass ein problemloses Einschieben des Dübels möglich ist.

Die Schlitze verlaufen vorzugsweise S-förmig, wodurch es möglich ist, die elastischen Bereiche einfach in axialer Richtung hintereinander anzuordnen. Es ist jedoch auch möglich, andere Geometrien für den Verlauf der Schlitze zu wählen. So sind auch gerade Schlitze denkbar, welche um einen Winkel gegenüber der axialen Richtung verdreht sind. Hierdurch ist es auch möglich, die Schlitze hintereinander und dennoch überlappend auszubilden.

Der Spreizdübel kann beispielsweise zumindest im Bereich des Klemmvorsprungs, vorzugsweise axial entlang der Längserstreckung der Aufnahme, einen ovalen Außenquerschnitt und/oder eine ovale Aufnahme aufweisen. Der Klemmvorsprung ist in diesem Fall vorzugsweise im Bereich einer Schmalseite des Ovals vorgesehen. Oval im Sinne des Außenquerschnittes kann auch sein, dass jeweils zwei gegenüberliegende Bereiche des Schnittes auf einem Kreis liegen und diese Kreise mit leicht unterschiedlichen Durchmessern mittels eines Übergangsbereiches ineinander übergehen.

Darüber hinaus können am Dübelkörper radial starre Bereiche vorgesehen sein, in welchen radial vorstehende Fortsätze vorgesehen sind, wobei die Fortsätze insbesondere umfangsmäßig um 90° versetzt zu den Klemmvorsprüngen angeordnet sind. Das heißt, zusätzlich zu den radial elastischen Bereichen mit den Klemmvorsprüngen können herkömmliche, radial vorstehende Fortsätze vorgesehen sein, die eine Verdrehung des Dübels verhindern. Diese sind z.B. um 90° versetzt zu den Klemmvorsprüngen vorgesehen, so dass der Dübel durch die Fortsätze und die Klemmvorsprünge in zwei rechtwinkelig zueinander angeordneten Achsen in der Bohrung zentriert und gehalten ist.

Diese starren Bereiche können beispielsweise im Bereich der Schmalseiten des ovalen Querschnitts vorgesehen sein, so dass diese beim Einschieben des Spreizdübels zuerst mit der Bohrwandung in Anlage kommen.

In diesem Fall ragen die Fortsätze beispielsweise in radialer Richtung weiter nach außen als die Klemmvorsprünge.

Zusätzlich können im Bereich des Kopfes (zur Dübelspitze entgegengesetztes Ende) Klemmvorsprünge und Fortsätze auf derselben axialen Höhe vorgesehen sein und vorzugsweise am Umfang abwechselnd angeordnet sein. Dadurch wird der Spreizdübel auf einer axialen Höhe in zwei zueinander senkrechten Achsen in der Bohrung zentriert bzw. geklemmt, so dass dieser besonders sicher in der Bohrung gehalten ist.

Um eine Klemmwirkung über die gesamte Länge des Spreizdübels zu bewirken, ist es denkbar, dass mehrere, in axialer Richtung hintereinander angeordnete Klemmbereiche vorgesehen sind.

Vorzugsweise haben die Klemmvorsprünge in radialer Ansicht im Wesentlichen die gleiche axiale und umfangsmäßige Erstreckung, d.h. sie bilden in radialer Ansicht im wesentlichen ein Quadrat. Die Fortsätze können beispielsweise langgestreckte Rippen sein.

Weitere Vorteile und Merkmale ergeben sich aus der nachfolgenden Beschreibung in Verbindung mit den beigefügten Zeichnungen. In diesen zeigen:
- Figur 1 einen Längsschnitt durch einen erfindungsgemäßen Spreizdübel;
- Figur 2 eine Draufsicht auf den Spreizdübel aus Figur 1;
- Figur 3 eine Schnittansicht durch den Spreizdübel aus Figur 2 im Schnitt III-III; und
- Figur 4 eine Darstellung der Spreizkraft des Spreizdübels aus Figur 1 über die Dübellängsachse.

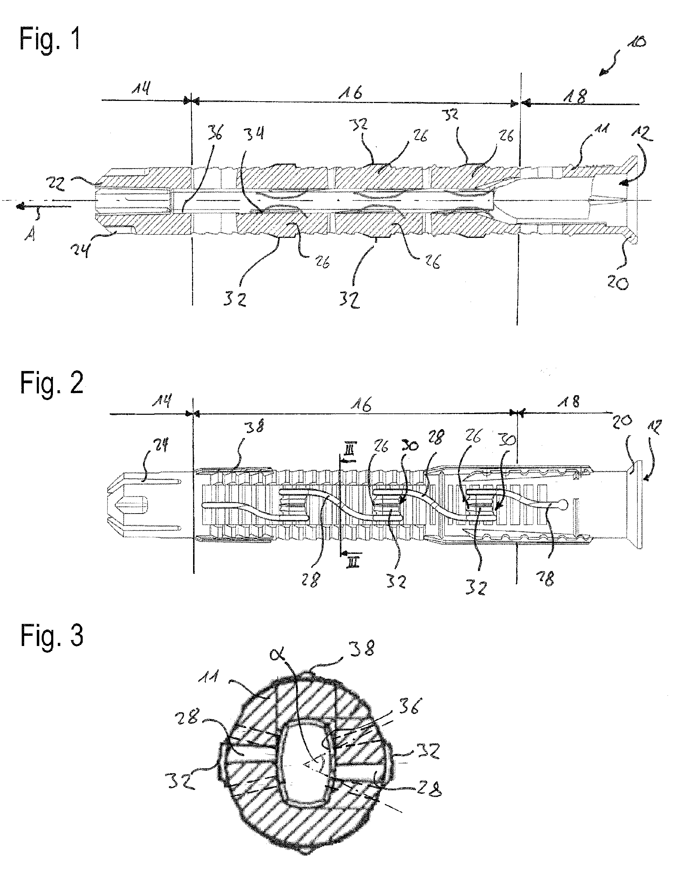

Der in den Figuren 1 bis 4 dargestellte Spreizdübel 10 dient zur Befestigung von Bauteilen in einem Untergrund. Der Spreizdübel 10 besteht aus einem sich in einer axialen Richtung A erstreckenden Dübelkörper 11, der eine in axialer Richtung A verlaufende Aufnahme 12 (zentrische Öffnung) aufweist. Der Spreizdübel 10 wird zur Montage in eine Bohrung des Untergrundes eingeführt und in dieser durch ein hier nicht dargestelltes Spreizelement, das in die Aufnahme 12 bewegt wird, aufgespreizt und dadurch in der Bohrung verklemmt. Das Spreizelement ist vorzugsweise ein Schraub-Spreizelement, das in die Aufnahme 12 des Spreizdübels 10 eingeschraubt wird. Möglich wäre alternativ dazu auch die Verwendung eines Schlag-Spreizelementes

Der Spreizdübel erstreckt sich hier im Wesentlichen in einer axialen Richtung A und hat eine Spitze 14, einen Klemmbereich 16 sowie einen Kopf 18, wobei sich die Aufnahme 12 durch alle drei Bereiche erstreckt. Die Spitze 14 dient dazu, den Spreizdübel 10 beim Einführen in die Bohrung des Untergrundes zu zentrieren und ein einfaches Einschieben zu ermöglichen. Die Spitze hat dazu einen konisch zulaufenden Endabschnitt 22 sowie mehrere in axialer Richtung A verlaufende Schlitze 24, die ein Zusammendrücken der Spitze 14 ermöglichen. Der Klemmbereich 16 wird durch das Einschieben des Spreizelements teilweise radial nach außen gedrängt, sodass dieser zwischen Bohrung und Spreizelement verklemmt wird und den Spreizdübel 10 in der Bohrung fixiert. Der Kopf 18 hat einen radial vorstehenden Flansch 20, der als Anschlag dient und ein zu weites Einschieben des Spreizdübels 10 in die Bohrung und/oder das zu befestigende Bauteil verhindert.

Der Klemmbereich 16 hat, wie insbesondere in Figur 1 zu sehen ist, insgesamt sechs elastische Bereiche 26, wobei jeweils zwei elastische Bereiche 26 bezüglich der Aufnahme 12 diametral gegenüberliegend angeordnet sind und jeweils drei, so gebildete Paare von elastischen Bereiche 26 in axialer Richtung hintereinander angeordnet sind. Die Anzahl und die Lage der elastischen Bereiche 26 kann aber auch beliebig variiert und verändert werden. Die elastischen Bereiche 26 sind, wie in Figur 2 zu sehen ist, jeweils durch zwei am Dübelkörper 11 vorgesehene S-förmige Schlitze 28 gebildet, die sich im Wesentlichen in axialer Richtung erstrecken und einen Überlappungsbereich 30 aufweisen, in dem die radial elastischen Bereiche 26 gebildet sind. Durch die Schlitze 28 können die elastischen Bereiche 26 in radialer Richtung gegenüber dem Dübelkörper 11 nachgeben bzw. federn.

Auf der Außenseite des Spreizdübels 10 ist an jedem der elastischen Bereiche 26 ein Klemmvorsprung 32 vorgesehen, der, wie insbesondere in den Figuren 1 und 3 zu sehen ist, nach außen über den Rest des Dübelkörpers 11 vorsteht. Radial innenseitig schließt die Dübelwand 34 der elastischen Bereiche 26 bündig mit dem axial angrenzenden Innenwandbereich 36 ab (siehe Fig. 1). Das heißt, die Innenwand der Aufnahme 12 ist zylindrisch, ohne im unbelasteten Zustand nach außen verlaufende Einbuchtungen oder nach innen ragende Vorsprünge ausgebildet. Dies ermöglicht eine einfache Herstellung des Spreizdübels 10 im Spritzgussverfahren mit einem Werkzeugkern, der nach dem Erhärten des Kunststoffs einfach in axialer Richtung aus der Aufnahme 12 entnehmbar ist.

Der Durchmesser des Dübelkörpers 11 ist so gewählt, dass dieser minimal kleiner ist als die Bohrung, in die der Spreizdübel 10 eingesetzt werden soll. Der Radius des Dübels (in axialer Richtung gesehen) am Klemmbereichs 16 im Bereich der Klemmvorsprünge 32 ist allerdings größer als der halbe Lochdurchmesser, sodass die elastischen Bereiche 26 bzw. die Klemmvorsprünge 32 beim Einschieben des Spreizdübels 10 in die Bohrung von der Bohrwandung radial nach innen gedrängt werden, wodurch die elastischen Bereiche 26 innenseitig in die Aufnahme ausbauchen (siehe dicke, bogenförmige Linien in Fig. 1), während die Klemmvorsprünge 32 an der Bohrwandung anliegen und gegen diese drücken.

Wird das Spreizelement in die Aufnahme 12 des Spreizdübels 10 eingedreht, werden die radial durch die Bohrwand einwärts gedrückten elastischen Bereiche 26 durch das Spreizelement radial nach außen gedrängt, sodass diese zwischen Spreizelement und Bohrwandung verklemmt werden, wodurch der Spreizdübel 10 zusätzlich in der Bohrung fixiert wird. Da die Klemmvorsprünge 32 schon in nicht eingeschobenem Zustand des Spreizelements durch die elastischen Bereiche 26 gegen die Bohrwandung gedrückt werden, verhindern diese beim Eindrehen des Spreizelements ein Mitdrehen des Spreizdübels 10 in der Bohrung. Diese Verdrehsicherung durch die Klemmvorsprünge 32 wird im Laufe des Einschraubvorgangs des Spreizelements verstärkt, da das Spreizelement die elastischen Bereiche 26 radial nach außen drängt, wodurch die Klemmkraft der elastischen Bereiche 26 bzw. der Klemmvorsprünge 32 erhöht wird. Die Klemmvorsprünge 32 erfüllen hier also drei Funktionen: Zum einen haben die Klemmvorsprünge die Funktion einer Verdrehsicherung, die ein Mitdrehen des Spreizdübels 10 beim Einschrauben des Spreizelements verhindern. Zum anderen dienen die Klemmvorsprünge 32 zum Verklemmen des Spreizdübels 10 in der Bohrung. Weiterhin dienen die Klemmvorsprünge 32 insbesondere bei der Verwendung in Hohlblocksteinen als hintergreifende Formschluß-Elemente.

Anders als bei starren Vorsprüngen, die üblicherweise verwendet werden, um eine Verdrehsicherung des Spreizdübels 10 zu bewirken, können die hier gezeigten Klemmvorsprünge 32 bzw. die elastischen Bereiche 26 in radialer Richtung nachgeben, sodass sie beim Einschieben des Spreizdübels 10 zurückfedern können, wodurch ein einfaches Einschieben des Spreizdübels möglich ist. Die Haltekraft der Klemmvorsprünge 32 steigt erst beim Einschieben des Spreizelements an, sodass gegebenenfalls eine Entnahme und Neuausrichtung des Spreizdübels 10 nach dem Einschieben möglich ist. Durch eine individuelle Anpassung bzw. eine entsprechende Geometrie der Klemmvorsprünge 32 ist zudem eine individuelle Anpassung der Klemmkraft des Spreizdübels möglich.

Wie in Figur 3 zu sehen ist, hat der Spreizdübel 10 im Klemmbereich 16 einen ovalen Außenquerschnitt sowie einen ovalen Querschnitt der Aufnahme 12, wobei die elastischen Bereiche 26 an den Schmalseiten des Ovals vorgesehen sind. An den Längsseiten des Querschnitts sind hier, wie insbesondere in den Figuren 2 und 3 zu sehen ist, zusätzliche starre Fortsätze 38 vorgesehen. Diese sind gegenüber den Klemmvorsprüngen 32 am Umfang um 90° versetzt und hier als in axialer Richtung A verlaufende Rippen ausgebildet.

Die in axialer Richtung gesehene Außenabmessung des Dübels an der Längsachse des Ovals (vertikale Abmessung in Fig. 3) ist hier größer als der Durchmesser der Bohrung, in die der Spreizdübel eingesetzt werden soll. Wie insbesondere in Figur 3 zu sehen ist, kann der Spreizdübel 10 in Richtung der Längsachse durch die Schlitze 28 zusammengedrückt werden, so dass der Spreizdübel 10 auch auf dieser Achse soweit zusammengedrückt werden kann, dass er in die Bohrung eingeschoben werden kann.

Auch der Abstand der zwei gegenüberliegenden Klemmvorsprünge 32 ist größer gewählt als der Durchmesser der Bohrung. Der Spreizdübel liegt also in eingeschobenem Zustand sowohl mit den Klemmvorsprüngen 32 als auch mit den starren Fortsätzen 38 an der Bohrwandung an, so dass der Spreizdübel 10 in zwei zueinander senkrechten Achsen geklemmt und zentriert ist.

Zu jedem Klemmvorsprung 32 gehören ihn umfangsmäßig begrenzende, eigene Schlitze 28. Die einem Vorsprung 32 zugeordneten Schlitze 28 schließen in Schnittansicht gemäß Fig. 3 gesehen einen Winkel α von maximal 110°, insbesondere maximal 90° ein, wobei der Winkel α zur Dübelmittelachse bezogen ist und die schmalste Stelle des elastischen Bereichs 32 am Außenumfang zur Winkelbestimmung herangezogen wird.

In radialer Ansicht gemäß Fig. 2 hat der Vorsprung 32 etwa dieselbe axiale und umfangsmäßige Erstreckung, so dass sich eine Art quadratische Fläche ergibt.

Beim Einschrauben des Spreizelements kommt dieses aufgrund des ovalen Querschnitts der Aufnahme 12 zuerst an den Schmalseiten des Querschnitts, also an den elastischen Bereichen 26 in Anlage und drängt diese nach außen, so dass diese den Spreizdübel 10 verklemmen. Bei einem weiteren Einschrauben kann zwar auch eine Klemmkraft auf die Fortsätze 38 ausgeübt werden, die Fixierung des Spreizdübels 10 erfolgt aber überwiegend über die Klemmvorsprünge 32. Durch eine entsprechende Dimensionierung der Klemmvorsprünge 32 kann die Haltekraft des Dübels auch individuell angepasst werden. Ebenso kann die Form, Größe und Position der Klemmvorsprünge individuell angepasst werden.

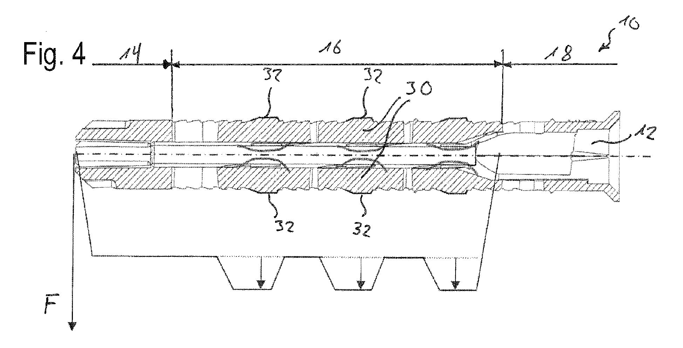

Da hier mehrere in axialer Richtung hintereinander angeordnete Klemmvorsprünge 32 bzw. elastische Bereiche 26 vorgesehen sind, ist über die gesamte Länge des Spreizbereichs eine Klemmung des Spreizdübels mit einigen Klemmkraftspitzen sichergestellt (siehe auch Figur 4). Zudem ist so auch, beispielsweise bei Hohlblocksteinen, eine ausreichende Klemmwirkung des Spreizdübels 10 gewährleistet. Abweichend von der hier dargestellten Ausführungsform ist es auch denkbar, dass die Klemmvorsprünge 32 bzw. die elastischen Bereiche 26 in radialer Richtung versetzt am Spreizdübel 10 vorgesehen sind.

## Patentansprüche

1. Spreizdübel (10) mit einem sich in einer axialen Richtung (A) erstreckenden Dübelkörper (11), der eine in axialer Richtung (A) verlaufende Aufnahme (12) für ein Spreizelement aufweist, und mit zumindest einem radial elastischen Bereich (26), der durch zwei am Dübelkörper (11) vorgesehene, sich in axialer Richtung (A) erstreckende Schlitze (28) gebildet ist, die sich in axialer Richtung (A) des Spreizdübels (10) zumindest teilweise überlappen,
**dadurch gekennzeichnet,**
**dass** die Dübelwand (34) in unbelastetem Zustand des Spreizdübels (10) zumindest einen radial nach außen vorstehenden Klemmvorsprung (32) hat, welcher im Überlappungsbereich der beiden sich in axialer Richtung (A) des Spreizdübels (10) zumindest teilweise überlappenden Schlitze (28) angeordnet ist und zwischen diesen beiden Schlitzen (28) liegt, wobei die Dübelwand (34) radial innenseitig im Bereich des Klemmvorsprungs (32) gegenüber dem axial angrenzenden Innenwandbereich (36) des Spreizdübels (10) bündig abschließt, und wobei die zu dem Klemmvorsprung (32) gehörenden Schlitze (28) in axialer Richtung (A) gesehen einen Winkel (α) von maximal 110° zur Dübelmittelachse einschließen.

2. Spreizdübel nach Anspruch 1, **dadurch gekennzeichnet, dass** jeweils zwei diametral gegenüberliegende, auf gleicher axialer Höhe liegende Klemmvorsprünge (32) vorgesehen sind und/oder dass die zu einem Klemmvorsprung (32) gehörenden Schlitze (28) in axialer Richtung (A) gesehen einen Winkel (α) von maximal 90° zur Dübelmittelachse einschließen.

3. Spreizdübel nach Anspruch 1 oder 2, **dadurch gekennzeichnet, dass** die Schlitze (28) S-förmig verlaufen.

4. Spreizdübel nach einem der vorhergehenden Ansprüche, **dadurch gekennzeichnet, dass** der Spreizdübel (10) zumindest im Bereich des Klemmvorsprungs (32), vorzugsweise entlang der Axialerstreckung der Aufnahme (12), einen ovalen Außenquerschnitt und/oder eine ovale Aufnahme aufweist, und dass der Klemmvorsprung (32) im Bereich einer Schmalseite des Ovals vorgesehen ist.

5. Spreizdübel nach einem der vorhergehenden Ansprüche, **dadurch gekennzeichnet, dass** am Dübelkörper (11) radial starre Bereiche vorgesehen sind, in welchen radial vorstehende Fortsätze (38) vorgesehen sind, wobei die Fortsätze (38) insbesondere umfangsmäßig um 90° versetzt zu den Klemmvorsprüngen (32) angeordnet sind.

6. Spreizdübel nach den Ansprüchen 4 und 5, **dadurch gekennzeichnet, dass** die Fortsätze (38) im Bereich der Längsseiten des ovalen Querschnitts vorgesehen sind.

7. Spreizdübel nach Anspruch 5 oder 6, **dadurch gekennzeichnet, dass** die Fortsätze (38) in radialer Richtung weiter nach außen ragen als die Klemmvorsprünge (32).

8. Spreizdübel nach einem der Ansprüche 5 bis 7, **dadurch gekennzeichnet, dass** im Bereich des Kopfes (18) Klemmvorsprünge (32) und Fortsätze (38) auf derselben axialen Höhe vorgesehen und am Umfang vorzugsweise abwechselnd angeordnet sind.

9. Spreizdübel nach einem der vorhergehenden Ansprüche, **dadurch gekennzeichnet, dass** mehrere, in axialer Richtung (A) hintereinander angeordnete Klemmvorsprünge (32) vorgesehen sind.

10. Spreizdübel nach einem der vorhergehenden Ansprüche, **dadurch gekennzeichnet, dass** die Klemmvorsprünge (32) in radialer Ansicht im Wesentlichen jeweils die gleiche axiale und umfangsmäßige Erstreckung haben und/oder die Fortsätze (38) axial langgestreckte Rippen sind.

## Claims

1. Expansion plug (10) with a plug body (11) extending in an axial direction (A), which has a housing (12) for an expansion element running in an axial direction (A), and with at least one radially elastic area (26), which is formed by two slots (28) provided on the plug body (11) extending in an axial direction (A), which at least partly overlap each other in the axial direction (A) of the expansion plug (10),
**characterised in that**
in the unloaded state of the expansion plug (10) the plug wall (34) has at least one clamping projection (32) projecting radially outwards, which is arranged in the overlapping area of both slots (28), which at least partly overlap each other in the axial direction (A) of the expansion plug (10), and lies between both these slots (28), in which the plug wall (34) is radially flush on the inside in the area of the clamping projection (32) with regard to the axially adjacent inner wall area (36) of the expansion plug (10), and in which the slots (28) belonging to the clamping projection (32) enclose an angle (α) of a maximum of 110° to the centre line of the plug when seen in the axial direction (A).

2. Expansion plug according to claim 1, **characterised in that** two clamping projections (32) lying diametrically opposite are provided at the same axial height and/or that the slots (28) belonging to a clamping projection (32) enclose an angle (α) of a maximum of 90° to the centre line of the plug when seen in the axial direction (A).

3. Expansion plug according to claim 1 or 2, **characterised in that** the slots (28) run in an S shape.

4. Expansion plug according to one of the previous claims, **characterised in that** the expansion plug (10) has an oval outer cross section at least in the area of the clamping projection (32), preferably along the axial extension of the housing (12), and/or an oval housing and that the clamping projection (32) is provided in the area of a narrow side of the oval.

5. Expansion plug according to one of the previous claims, **characterised in that** radially rigid areas are provided on the plug body (11), in which radially projecting extensions (38) are provided, in which the extensions (38) are arranged offset to the clamping projections (32), particularly by 90° circumferentially.

6. Expansion plug according to claims 4 and 5, **characterised in that** the extensions (38) are provided in the area of the long sides of the oval cross section.

7. Expansion plug according to claims 5 or 6, **characterised in that** the extensions (38) project further outwards in the radial direction than the clamping projections (32).

8. Expansion plug according to one of claims 5 to 7, **characterised in that** clamping projections (32) and extensions (38) are provided at the same axial height in the area of the head (18) and are arranged preferably alternating on the circumference.

9. Expansion plug according to one of the previous claims, **characterised in that** several clamping projections (32) are provided arranged one behind the other in the axial direction (A).

10. Expansion plug according to one of the previous claims, **characterised in that** essentially in the radial view the clamping projections (32) have the same axial and circumferential extension and/or the extensions (38) are axially elongated ribs.

## Revendications

1. Cheville à expansion (10) comprenant un corps (11) de cheville, s'étendant dans une direction axiale (A), qui présente un logement (12), orienté dans la direction axiale (A), destiné à un élément d'expansion, et au moins une zone élastique radiale (26) qui est formée par deux fentes (28), s'étendant en direction axiale (A), prévues sur le corps (11) de cheville, fentes qui se superposent au moins partiellement dans la direction axiale (A) de la cheville à expansion (10),
**caractérisée en ce**
**que** la paroi (34) de la cheville, à l'état non sollicité de la cheville à expansion (10), possède au moins une partie saillante (32) de serrage dépassant radialement vers l'extérieur, qui est disposée dans la zone de superposition des deux fentes (28) se chevauchant au moins partiellement dans la direction axiale (A) de la cheville à expansion (10), la paroi (34) de la cheville s'achevant de manière continue dans la zone de la partie saillante (32) de serrage, radialement du côté intérieur par rapport à la zone de la paroi interne (36) axiale voisine de la cheville à expansion (10), et les fentes (28) correspondant à la partie en saillie (32) de serrage, vu dans la direction axiale (A), font un angle (α) d'au maximum 110° par rapport à l'axe central de la cheville.

2. Cheville à expansion selon la revendication 1, **caractérisée en ce que** deux parties en saillie (32) de serrage, respectivement diamétralement opposées, situées à une même hauteur axiale sont prévues et/ou que les fentes (28) correspondant à une partie en saillie (32) de serrage font un angle (α), vu en direction axiale (A), d'au maximum 90 ° par rapport à l'axe central de la cheville.

3. Cheville à expansion selon les revendications 1 ou 2, **caractérisée en ce que** les fentes (28) se déploient en forme de S.

4. Cheville à expansion selon l'une des revendications précédentes, **caractérisées en ce que** la cheville à expansion (10) présente une section transversale extérieure ovale au moins dans la zone de la partie saillante (32) de serrage, de préférence, le long du déploiement axial du logement (12), et/ou un logement ovale, et que la partie saillante (32) de serrage est prévue dans la zone du côté étroit de l'ovale.

5. Cheville à expansion selon l'une des revendications précédentes, **caractérisée en ce que** des zones radiales rigides sont prévues sur le corps (11) de cheville, dans lesquelles des prolongements (38) dépassant radialement, sont prévus, les prolongements (38) étant disposés sur le périmètre, en particulier, espacés de 90° par rapport aux parties saillantes (32) de serrage.

6. Cheville à expansion selon les revendications 4 et 5, **caractérisée en ce que** les prolongements (38) sont prévus dans la zone des côtés longs de la section transversale ovale.

7. Cheville à expansion selon les revendications 5 ou 6, **caractérisée en ce que** les prolongements (38) dépassent davantage vers l'extérieur dans 1a direction radiale que les parties saillantes (32) de serrage.

8. Cheville à expansion selon l'une des revendications 5 à 7, **caractérisée en ce que**, dans la zone de la tête (18), des parties saillantes (32) de serrage et des prolongements (38) sont prévus à la même hauteur et sont agencés de préférence en alternance sur le périmètre.

9. Cheville à expansion selon l'une des revendications précédentes, **caractérisée en ce que** plusieurs parties saillantes (32) de serrage disposées les unes derrière les autres sont prévues dans la direction axiale (A).

10. Cheville à expansion selon l'une des revendications précédentes, **caractérisée en ce que** les parties saillantes (32) de serrage, en vue radiale, possèdent dans l'ensemble respectivement le même arrangement axial et le même agencement sur le périmètre et/ou que les prolongements sont des nervures étirées axialement.
